# EUROPÄISCHE PATENTSCHRIFT

(11) **EP 2 507 173 B1**
(45) Veröffentlichungstag und Bekanntmachung des Hinweises auf die Patenterteilung: **09.08.2017**
(21) Anmeldenummer: 10785076.0
(22) Anmeldetag: 02.12.2010
(51) Int. Cl.: C01B 33/107

(54) **VERFAHREN ZUR HERSTELLUNG VON HEXACHLORDISILAN**
PREPARATION OF HEXCHLORODISILANE
PROCEDE DE LA PREPARATION DU HEXACHLORUREDSILANE

(30) Priorität: 02.12.2009 DE 102009056438
(43) Veröffentlichungstag der Anmeldung: 10.10.2012
(73) Patentinhaber: Nagarjuna Fertilizers and Chemicals Limited, HYDERABAD 500 082 (IN)
(72) Erfinder: AUNER, Norbert, 61479 Glashütten (DE); BAUCH, Christian, 06774 Muldenstein (DE); HOLL, Sven, 65558 Gückigen (DE); DELTSCHEW, Rumen, 04319 Leipzig (DE); MOHSSENI, Javad, 06766 Bitterfeld - Wolfen (DE); LIPPOLD, Gerd, 04179 Leipzig (DE); GEBEL, Thoralf, 01465 Dresden (DE)
(74) Vertreter: Epping - Hermann - Fischer
(86) Internationale Anmeldenummer: PCT/EP2010/068728
(87) Internationale Veröffentlichungsnummer: WO 2011/067331

(56) Entgegenhaltungen:
- EP-A1- 1 264 798
- EP-A2- 2 067 745
- WO-A1-2008/009473
- WO-A2-2009/143825
- DE-A1- 3 623 493
- DE-A1-102007 000 841

## Beschreibung

Die vorliegende Erfindung betrifft ein Verfahren zur Herstellung von Hexachlordisilan (Si₂Cl₆).

Hexachlordisilan ist ein wichtiges Vorprodukt zur Herstellung von Silicium und zur Hydrierung, Derivatisierung etc. Es sind diverse Verfahren zur Herstellung von Hexachlordisilan bekannt.

Bei den bekannten Herstellverfahren besteht jedoch in der Regel das Problem, dass Hexachlordisilan nur im Gemisch mit weiteren Oligomeren anfällt, so dass zur Gewinnung des Hexachlordisilans zusätzliche aufwändige Trennschritte erforderlich sind.

So ist es aus der EP 283 905 bekannt, Mischungen von Si₂Cl₆ und Si₃Cl₈ mit SiCl₄ durch kupferkatalysierte Umsetzung von Silicium bei 140-300 °C herzustellen. Die Ausbeute an Oligosilanen erreicht dabei mehr als 40% bezogen auf die angesetzte Siliciummenge. Zur Gewinnung von Hexachlordisilan sind die vorstehend erwähnten Trennschritte erforderlich.

Die GB 702 349 offenbart die Umsetzung von gasförmigen Gemischen SiCl₄/Cl₂ mit Siliciumverbindungen oder Siliciumlegierungen, beispielsweise CaSi₂, bei 90-250 °C zu Mischungen perchlorierter Oligosilane. Si₂Cl₆ wird in einem Gehalt von 40-55 Gewichts-% in der Produktmischung nachgewiesen. Zur Isolierung sind auch hier die erwähnten Trennverfahren erforderlich.

Aus M. Schmeisser, P. Voss, Zeitschrift für anorganische und allgemeine Chemie 334 (1964) 50 ist es bekannt, dass perchlorierte Polysilane mit Chlorgas bei 60 °C zu Mischungen perchlorierter Oligosilane SiₙCl₂ₙ₊₂(n ≥ 2) abgebaut werden. Erst ab etwa 200 °C findet eine weitere Abreaktion der Oligosilane zu SiCl₄ statt.

E. Bonitz berichtet in Chemische Berichte 94 (1961) 220 und Angewandte Chemie 78 (1976) 475, dass nach Vermahlen von Ca-Si₂ in geeigneten Lösungsmitteln Cl₂ den Feststoff bei < 60 °C zunächst unter Bildung von Silicium, dann von chlorhaltigen Produkten SiClₓ (x<l) bis zum SiCl umsetzt. Bei höheren Temperaturen entstehen dann lösliche Produkte SiClₓ (1<x<2), bis schließlich Verbindungen SiₙCl₂ₙ₊₂ erhalten werden. Die Oxidation von SiCl wird durch feinverteilte Übergangsmetalle, wie Fe, Cu oder Ni, unterstützt.

Aus der DE 1079607 und der DE 1132901 ist es bekannt, dass das Vermahlen von Silicium oder Siliciumlegierungen (beispielsweise Ferrosilicium) mit katalytisch wirksamen Metallen oder Metallverbindungen in flüssigen Verdünnungsmitteln zu Suspensionen führt, deren Siliciumanteil quantitativ mit Chlorgas zu SinCl₂ₙ₊₂(n ≥ 2) abreagiert. Die oxidative Spaltung von perchlorierten Polysilanen mit Chlorgas bei nicht zu hohen Temperaturen stellt daher eine geeignete Möglichkeit dar, um Gemische aus perchlorierten Oligosilanen mit hohen Ausbeuten bezüglich der einbesetzten Siliciummenge zu erhalten. In diesen Gemischen stellt zwar (Si₂Cl₆) den Hauptbestandteil dar, jedoch enthalten die Gemische auch die restlichen Oligosilane in Anteilen von üblicherweise > 25 Gew.%, so dass, wie vorstehend erwähnt, zur Isolierung des Hexachlordisilans aufwändige Trennverfahren erforderlich sind.

Das Vorgehen von E. Bonitz setzt eine Aktivierung, nämlich ein technisch aufwändiges intensives Vermahlen, der siliciumhaltigen Ausgangsmaterialien unter Zugabe flüssiger Verdünnungsmittel voraus, ferner den Einsatz von katalytisch wirksamen Metallen oder Metallverbindungen.

Die Druckschrift EP 2 067 745 A2 beschreibt u.a. die Herstellung von Trichlorsilan (SiHCl₃) aus Tetrachlorsilan (SiCl₄) und Wasserstoff bei hohen Temperaturen. Nach Kondensation der Reaktionsmischung werden zunächst Trichlorsilan und dann Tetrachlorsilan per Vakuumdestillation unter milden Bedingungen isoliert und anschließend Hexachlordisilan (Si₂Cl₆) aus der verbleibenden Flüssigkeit zurückgewonnen. Das Hexachlordisilan wird im sogenannten "third distillation process" gewonnen, wobei neben Hexachlordisilan (Si₂Cl₆) auch Tetrachlordisilan (SiH₂Cl₄) erhalten wird, das einen ähnlichen Siedepunkt aufweist. Um die Ausbeute an Hexachlordisilan zu erhöhen, kann - insbesondere nach Entfernen des SiCl₄ - die verbleibende Flüssigkeit mit 5 bis 10 Gew-% Chlor versetzt werden. Überschüssiges Chlor wird in der Regel mit Stickstoff ausgetrieben, bevor das Hexachlordisilan destillativ isoliert wird.

Der vorliegenden Erfindung liegt die Aufgabe zugrunde, ein Verfahren zur Herstellung von Hexachlordisilan zur Verfügung zu stellen, das besonders einfach durchführbar ist und zu einer besonders hohen Ausbeute in Bezug auf die eingesetzte Siliciummenge führt.

Diese Aufgabe wird erfindungsgemäß durch ein Verfahren zur Herstellung von Hexachlordisilan gelöst, das dadurch gekennzeichnet ist, dass chloriertes Polysilan der empirischen Formel SiClₓ mit x = 0,2 bis 0,8 oxidativ mittels Chlorierung gespalten wird.

Bei dem chlorierten Polysilan der empirischen bzw. analytischen Formel SiClₓ mit x = 0,2 bis 0,8 handelt es sich um ein stark vernetztes, chloriertes Polysilan, da x < 1 ist. Damit weist die Verbindung ein räumliches Silicium-Gerüst auf, das neben Silicium-Zentren mit einem oder mehreren Chlor-Substituenten ebenfalls Silicium-Zentren besitzen muss, die keinen Chlor-Substituenten aufweisen, sondern nur Bindungen zu weiteren Silicium-Zentren bzw. -Atomen. Bei chlorierten Polysilanen der empirischen bzw. analytischen Formel SiClₓ mit 1 < x < 2 hingegen handelt es sich um Verbindungen, die nur eine leichtere Vernetzung aufweisen, da im Mittel jedes Silicium-Atom mindestens einen Chlor-Substituenten besitzt. Diese Polysilane können beispielsweise durch eine flächige, zweidimensionale Struktur gekennzeichnet sein, die im Vergleich zu Verbindungen mit einer Ketten- und/oder Ringstruktur und x ≥ 2 zusätzlich Vernetzungsstellen aufweist.

Überaschenderweise wurde festgestellt, dass der oxidative Abbau von stark vernetzten chlorierten Polysilanen der empirischen Formel SiClₓ (x = 0,2-0,8) nicht zu Gemischen mehrerer Produkte, sondern ausschließlich zu Hexachlordisilan (Si₂Cl₆) führt. Mit "ausschließlich" ist hier gemeint, dass das Produkt auch noch geringe Mengen an SiCl₄ und/oder geringe Mengen unlöslicher Reststoffe enthalten kann.

Die hier in Rede stehenden stark vernetzten chlorierten Polysilane der vorstehend genannten empirischen Formel können auch aufgrund ihrer Zusammensetzung und Struktur als chloridhaltiges Silicium bezeichnet werden. Der oxidative Abbau von derartigem chloridhaltigen Silicium führt daher nahezu ausschließlich zu Hexachlordisilan. Nur bei unvollständigem Reaktionsablauf, also beispielsweise durch vorzeitigen Abbruch der Reaktion, können auch längerkettige Silane entstehen. Die Chlorierung kann insbesondere mittels eines Chlorierungsmittels erfolgen, das Chlor in molekularer Form oder in atomarer Form freisetzen oder übertragen kann. Insbesondere geeignet als Chlorierungsmittel ist hierbei Chlorgas (Cl₂). Denkbar sind aber auch chlorhaltige Verbindungen, beispielsweise Nichtmetallchloride, etwa Interhalogenverbindungen. Als Ausgangsstoff kann insbesondere durch Thermolyse von Chlorpolysilan, z.B.(SiCl₂)ₓ, welches durch ein plasmachemisches Verfahren oder thermisch hergestellt wurde, gewonnenes chloriertes Polysilan der empirischen Formel SiClₓ mit x = 0,2-0,8 verwendet werden. Abhängig von der Nachbehandlung des chlorhaltigen Siliciums nach der Thermolyse und der Handhabung kann das Produkt, wie erwähnt, auch SiCl₄ und/oder geringere Mengen unlöslicher Reststoffe enthalten. Das chloriertes Polysilan der empirischen Formel SiClₓ mit x = 0,2-0,8 kann insbesondere gemäß der WO 09/143825 A2 erhalten werden. Hierbei wird insbesondere Chlorpolysilan unter kontinuierlicher Zugabe in einem Reaktor thermisch zersetzt wird, wobei ferner insbesondere die thermische Zersetzung im Temperaturbereich von 350 °C und 1.200 °C erfolgt.

Plasmachemisch hergestelltes Chlorpolysilan, z.B. (SiCl₂)ₓ kann insbesondere ein halogeniertes Polysilan als reine Verbindung oder als Gemisch von Verbindungen mit jeweils mindestens einer direkten Bindung Si-Si sein, wobei die Substituenten aus Halogen oder aus Halogen und Wasserstoff bestehen und wobei in der Zusammensetzung das Atomverhältnis Substituent:Silicium mindestens 1:1 beträgt, wobei
a. Der H-Gehalt des Polysilans kleiner als 2 Atom-% ist,
b. das Polysilan nahezu keine verzweigten Ketten und Ringe enthält, wobei der Gehalt an Verzweigungsstellen des kurzkettigen Anteiles, insbesondere des aufsummierten Anteils der perhalogenierten Derivate von Neohexasilan, Neopentasilan, Isotetrasilan, Isopentasilan und Isohexasilan, bezogen auf das gesamte Produktgemisch unter 1 % beträgt,
c. es ein Raman-Molekülschwingungsspektrum von I₁₀₀/I₁₃₂ größer 1 aufweist, wobei I₁₀₀ die Raman-Intensität bei 100 cm⁻¹ und I₁₃₂ die Raman-Intensität bei 132 cm⁻¹ bedeuten,
d. es in ²⁹Si-NMR-Spektren seine signifikanten Produktsignale im chemischen Verschiebungsbereich von +15 ppm bis -7 ppm aufweist, wenn die Substituenten Chlor sind.

Der Gehalt an Verzweigungsstellen wird hierbei mittels Integration der ²⁹Si-NMR-Signale für die tertiären und quartären Si-Atome bestimmt. Der kurzkettige Anteil ist dabei der Anteil der halogenierten Polysilane bezeichnet dabei alle Silane mit bis zu sechs Siliziumatomen. Gemäß einer alternativen Ausführungsform kann der Anteil der chlorierten kurzkettigen Silane besonders schnell bestimmt werden, wenn folgendermaßen vorgegangen wird. Zunächst wird der Bereich von +23 ppm bis -13 ppm im ²⁹Si-NMR integriert (in dem insbesondere Signale primäre und sekundäre Siliziumatome zu finden sind) und nachfolgend die Signale für tertiären und quartären Si-Atome im Bereich von -18 ppm bis -33 ppm und von -73 ppm bis -93 ppm der jeweils perchlorierten Derivate der folgenden Verbindungen: Neohexasilan, Neopentasilan, Isotetrasilan, Isopentasilan und Isohexasilan. Nachfolgend wird das Verhältnis der jeweiligen Integrationen I_{kurzkettig}:I_{primär}/_{sekundär} bestimmt. Dieses ist bezüglich der aufsummierten Integration für die jeweils perchlorierten Derivate von Neohexasilan, Neopentasilan, Isotetrasilan, Isopentasilan und Isohexasilan kleiner als 1:100.

Im Übrigen wird die Synthese und Charakterisierung dieser langkettigen, halogenierten Polysilane in der Patentanmeldung WO 2009/143823 A2 beschrieben. Weiterhin können perhalogenierte Polysilane eingesetzt werden, die wie sie in der WO 2006/125425 A1 beschrieben sind, wobei zu beachten ist, dass das dort verwendete Plasma eine höhere Leistungsdichte besitzt, was zu einem geänderten Produktspektrum führt.

Thermisch hergestelltes Chlorpolysilan, z.B. (SiCl₂)ₓ, kann insbesondere ein chloriertes Polysilan als reine Verbindung oder als Gemisch von Verbindungen mit jeweils mindestens einer direkten Bindung Si-Si sein, wobei die Substituenten aus Chlor oder aus Chlor und Wasserstoff bestehen und wobei in der Zusammensetzung das Atomverhältnis Substituent:Silicium mindestens 1:1 beträgt, wobei
a. das Polysilan aus Ringen und Ketten mit einem hohen Anteil Verzweigungsstellen besteht, der bezogen auf das gesamte Produktgemisch > 1 % beträgt,
b. es ein Raman-Molekülschwingungsspektrum von I₁₀₀/I₁₃₁ kleiner 1 aufweist, wobei I₁₀₀ die Raman-Intensität bei 100 cm⁻¹ und I₁₃₂ die Raman-Intensität bei 132 cm⁻¹ bedeuten,
c. es in ²⁹Si-NMR-Spektren seine signifikanten Produktsignale im chemischen Verschiebungsbereich von +23 ppm bis -13 ppm, von -18 ppm bis -33 ppm und von -73 ppm bis -93 ppm besitzt.

Die Synthese und Charakterisierung dieser verzweigten halogenierten Polysilane ist in der Patentanmeldung WO 2009/143824 A2 beschrieben. Bei dem erfindungsgemäßen Verfahren wird die oxidative Spaltung mit Cl₂ vorzugsweise in einem Temperaturbereich von 80 - 145 °C, insbesondere bei 110 - 130 °C, beispielsweise bei 120 °C, durchgeführt. In diesem Temperaturbereich lassen sich in Bezug auf die selektive Herstellung von Hexachlordisilan die besten Ergebnisse hinsichtlich Selektivität und Ausbeute erzielen.

Die oxidative Spaltung kann insbesondere bei Drücken zwischen 100 hPa und 10000 hPa durchgeführt werden und wird vorzugsweise bei Normaldruck (1000 hPa) bis 300 hPa Überdruck (d.h. 1300 hPa) durchgeführt.

Falls erforderlich, kann das durch die oxidative Spaltung erhaltene Endprodukt auch einem Trennschritt, insbesondere durch Auskondensation und/oder Destillation, unterzogen werden. Im Normalfall ist ein derartiger Trennschritt jedoch nicht erforderlich, da bei dem erfindungsgemäßen Verfahren im Gegensatz zum Stand der Technik nahezu ausschließlich Hexachlordisilan anfällt.

Vorzugsweise wird stark vernetztes chloriertes Polysilan der empirischen Formel SiClₓ mit x = 0,5 - 0,7 eingesetzt. Derartige chlorierte Polysilane sind hinsichtlich Ihrer Reaktivität besonders günstig.

Gemäß einer Ausführungsform kann das eingesetzte chlorierte Polysilan nicht nur aus Silizium und Chlor bestehen sondern zusätzlich zu diesen Elementen auch noch Wasserstoff enthalten. Dies kann sich vorteilhaft auf die Ausbeute des gebildeten Hexachlordisilans auswirken. Der Wasserstoffgehalt liegt dabei im Regelfall nicht über 5 Atom% und meist unter 1 Atom% und kann durch Integration von ¹H-NMR Spektren unter Verwendung eines internen Standards und Vergleich der erhaltenen Integrale bei bekanntem Mischungsverhältnis bestimmt werden.

Es hat sich gezeigt, dass bei dem erfindungsgemäßen Verfahren Hexachlordisilan in einem Anteil von > 60 Gewichts-% vom Endprodukt, insbesondere > 70 Gewichts-% vom Endprodukt und ganz insbesondere > 80 Gewichts-% vom Endprodukt, erhalten wird. Der verbleibende Anteil des Endprodukts enthält im Wesentlichen SiCl₄ und unlösliche Feststoffe, die nicht abdestillierbar sind. Andere Chlorsilane als SiCl₄ und Si₂Cl₆ werden üblicherweise nur in sehr geringem Umfang erhalten; ihr Anteil beträgt im Regelfall < 5 Gewichts-%, meist < 2 Gewichts-% und üblicherweise sogar < 1 Gewichts-% und kann mittels Integration von in Lösung aufgenommenen ²⁹Si-NMR-Spektren bestimmt werden.

Das erfindungsgemäße Verfahren wird vorzugsweise katalysatorfrei durchgeführt. Ein gezieltes Zusetzen eines Katalysators ist daher nicht erforderlich. Insbesondere gilt dabei natürlich, dass anders als gemäß dem Stand der Technik kein Zusatz eines Metall-Katalysators erforderlich ist. Auch wird generell die Anwesenheit eines Katalysators, sei es durch bereits vorhandene Substanzen (durch die Apparatur etc.) oder im Ausgangsstoff (z.B. durch Verunreinigungen), nicht benötigt. Dies steht im Gegensatz zum Stand der Technik (Veröffentlichung von E. Bonitz).

Das stark vernetzte chlorierte Polysilan kann ferner erfindungsgemäß ohne vorherige Aktivierung oxidativ gespalten werden. Hiermit ist gemeint, dass keine vorherige physikalische Aktivierung, beispielsweise durch Mahlen der Substanz zur Oberflachenvergrößerung oder das sonstige Entfernen einer passivierenden Oberflächenschicht, aber auch keine chemische Aktivierung, beispielsweise durch Ätzen etc., erforderlich ist. Auch dies steht im Gegensatz zum Stand der Technik (Veröffentlichung von E. Bonitz).

Das erfindungsgemäße Verfahren wird nachfolgend anhand eines Vergleichsbeispiels und von zwei Ausführungsbeispielen erläutert.

Die NMR-Messungen erfolgten dabei bei Raumtemperatur auf einem AV 400 NMR-Spektrometer von Bruker mit dem Pulsprogramm zg30 und einer Messfrequenz von 59,6 MHz 79,5 MHz (nur Beispiel 2) und in C₆D₆ als Lösungsmittel sofern nicht angegeben ist, dass es sich um ein Festkörper-NMR-Spektrum handelt. Die IR-Spektren wurden mit einem Spektrometer der Marke Bruker Optics IFS48 mit ATR-Messeinheit ("Golden Gate", Diamant-Fenster, Einfach-Reflexion) aufgenommen. Die Festkörper-NMR-Spektren wurden mit einem Bruker DSX-400 NMR-Spektrometer aufgenommen, die Messbedingungen waren einerseits ²⁹Si HPDec, 79,5 MHz, Rotationsfrequenz: 7000 Hz, extern auf TMS = 0 ppm referenziert, zum anderen für ¹H mit dem Pulsprogramm zg4pm.98 bei 400 MHz, Rotationsfrequenz: 31115 Hz mit 2,5 mm MAS Kopf, auf TMS = 0 ppm referenziert, die Messungen erfolgten bei Raumtemperatur.

### Vergleichsbeispiel

62 g hochviskoses Polychlorsilan (SiCl₂)ₓ wurden auf 120 °C erwärmt. Unter Rühren wurde Chlorgas eingeleitet. Nach 19 h nahm die Reaktionsmischung kein Chlorgas mehr auf. Ein ²⁹Si-NMR-Spektrum der Flüssigkeit zeigte Signale von Si₂Cl₆, Si₃Cl₈, iso-Si₄Cl₁₀, neo-Si₅Cl₁₂ und von weiteren chlorierten Oligosilanen. Die destillative Aufarbeitung der Reaktionsmischung lieferte 54 Gewichts-% Si₂Cl₆ und 25 Gewichts-% Si₃Cl₈ (bezogen auf die gesamte erhaltene Produktmischung).

### Ausführungsbeispiel 1

Eine Lösung von (SiCl₂)ₓ in SiCl₄ wurde bei < 450 °C zu einem rotgefärbten Produkt der Zusammensetzung SiCl_{0,5} zersetzt. 9 g dieses Materiales wurden in 55 g Si₂Cl₆ suspendiert. Bei 120 °C wurde Chlorgas eingeleitet. Nach 10 h nahm die Reaktionsmischung kein Chlorgas mehr auf. Ein ²⁹Si-NMR-Spektrum der Flüssigkeit zeigte neben einem starken Signal von Si₂Cl₆ nur noch ein sehr schwaches Signal von SiCl₄.

Weitere Chlorsilane sind höchstens in geringer Menge vorhanden. Destillative Aufarbeitung des Produktes ergab 8% einer Fraktion aus SiCl₄ mit wenig Si₂Cl₆ und 85% einer weiteren Fraktion aus Si₂Cl₆. Der Destillationsrückstand von 7% bestand weitgehend aus Si₂Cl₆ mit geringen Mengen unlöslicher Feststoffe.

### Ausführungsbeispiel 2:

21,02 g des wie oben genannt erzeugten Materiales werden in 45,93 g Si₃Cl₈ als Lösungsmittel suspendiert und bei 120°C mit Chlorgas beaufschlagt. Nach 37,5 h besteht der Kolbeninhalt nach ²⁹Si-NMR-spektroskopischer Analyse neben dem eingesetzten Si₃Cl₈ nur aus Si₂Cl₆ und SiCl₄. Weitere Chlorsilane sind höchstens in geringen Mengen vorhanden.

Ein Vergleich des Vergleichsbeispieles mit den Ausführungsbeispielen 1 und 2 zeigt, dass durch die oxidative Aufspaltung des stark vernetzten chlorierten Polysilans gemäß der Erfindung auf selektive Weise Hexachlordisilan gewonnen wird, weitere Chlorsilane werden höchstens in geringer Menge erzeugt. Bei der Verwendung von hochviskosem Polychlorsilan (SiCl₂)ₓ wird stattdessen ein Gemisch mehrerer Produkte erhalten.

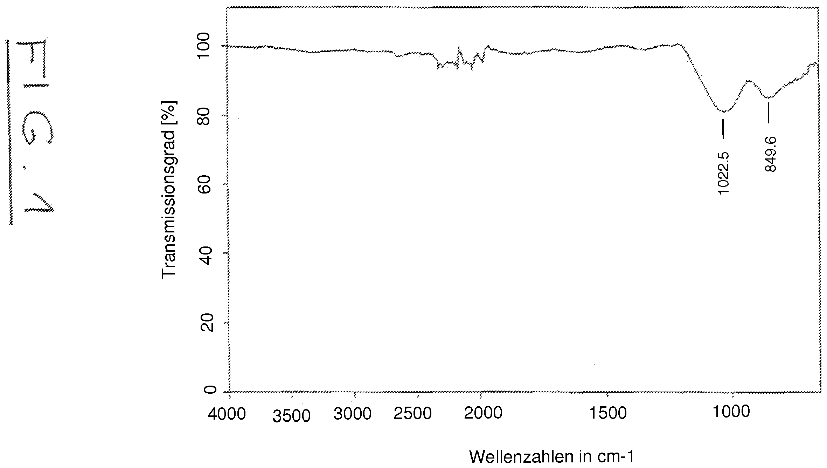

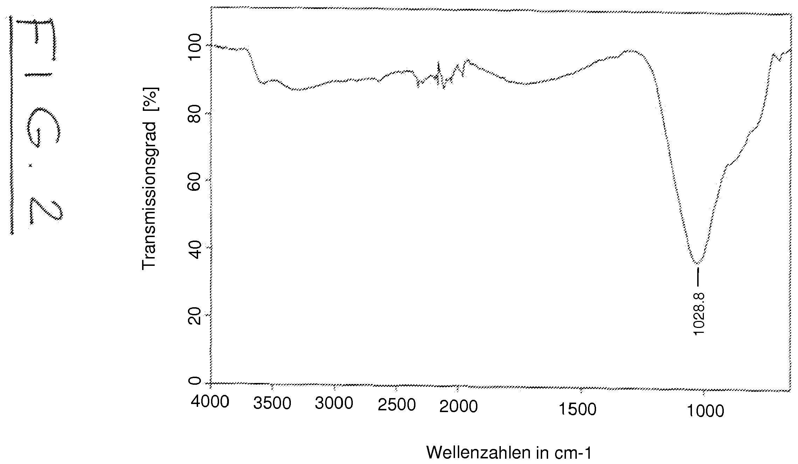

Die nachfolgenden Figuren 1 und 2 zeigen IR-Spektren von einem chloridhaltigen Silicium der Zusammensetzung SiCl_{0,05} bis SiCl_{0,07} (Figur 1) und von SiCl_{0,7} (Figur 2).

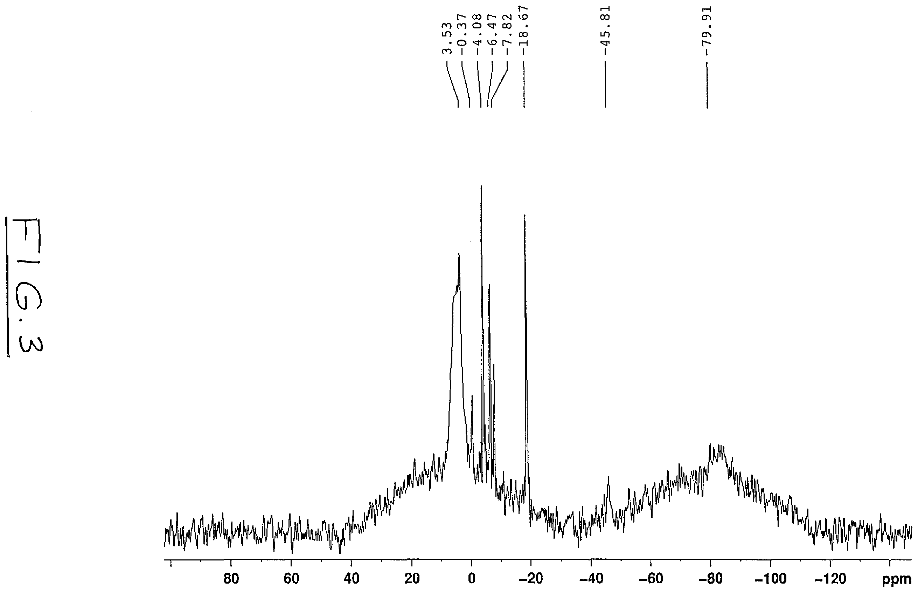

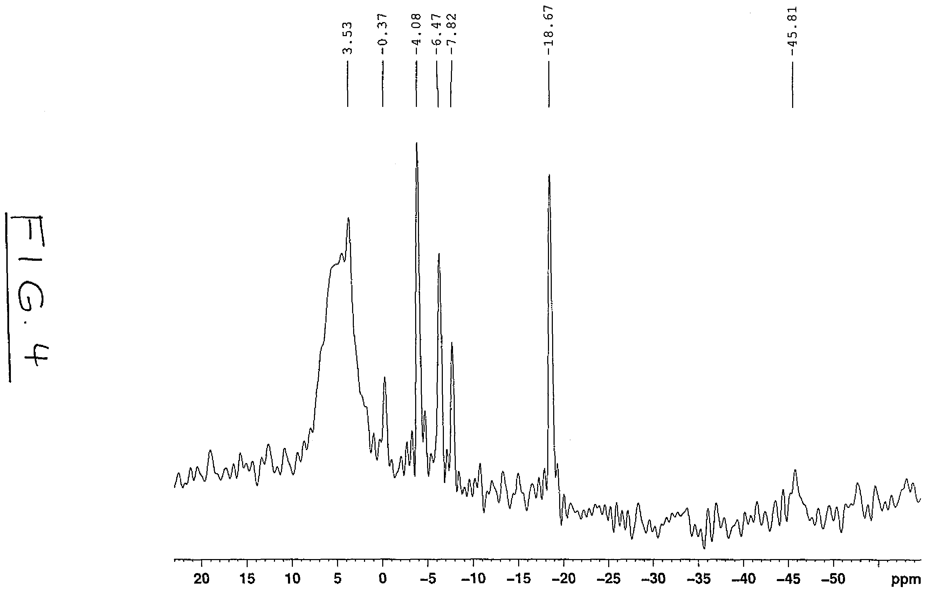

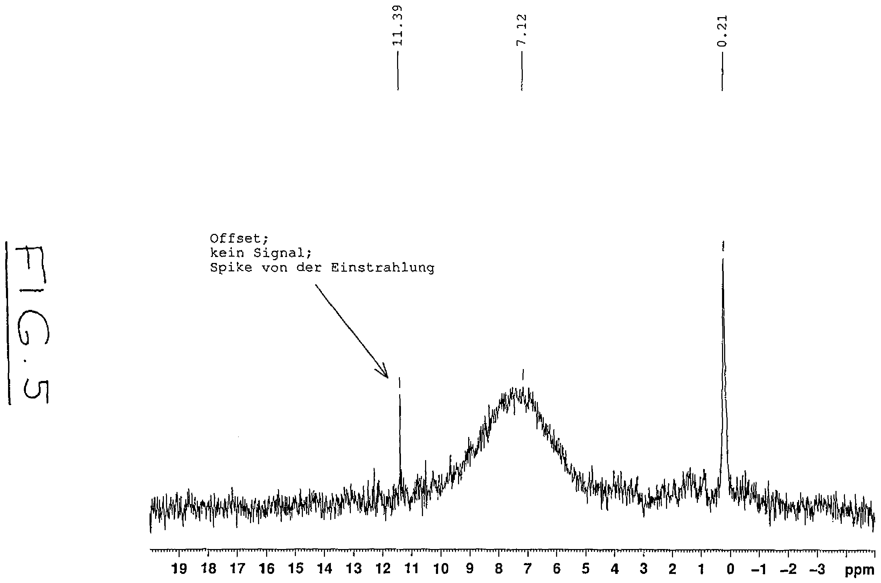

Die Figuren 3 und 4 zeigen ²⁹Si-Festkörper-NMR-Spektren von einem chloridhaltigen Silicium mit der empirischen Formel SiCl_{0,7}. Figur 5 zeigt das ¹H-Festkörper-NMR-Spektrum zum chloridhaltigen Silicium mit der empirischen Formel SiCl_{0,7}.

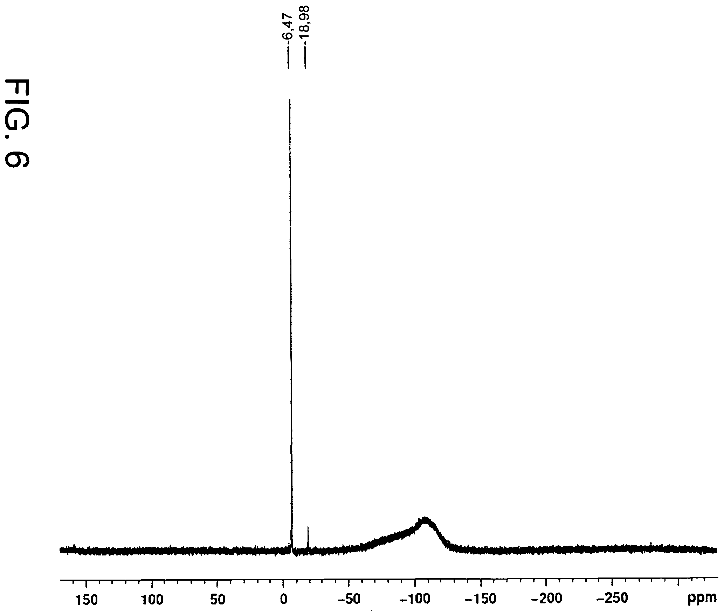

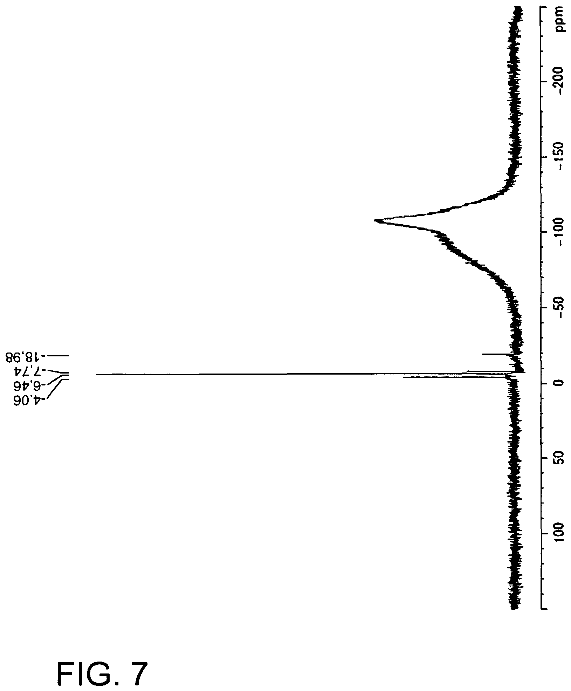

Figur 6 zeigt das ²⁹Si-Festkörper-NMR-Spektrum der Reaktionsmischung nach der Umsetzung von chloridhaltigem Silicium mit Chlor in Si₂Cl₆. Figur 7 zeigt das ²⁹Si- Festkörper-NMR-Spektrum der Reaktionsmischung nach der Umsetzung von chloridhaltigem Silicium mit Chlor in Si₃Cl₈. Das breite Signal mit dem Maximum bei ca. -100 ppm ist auf das Glas des NMR-Rohres zurückzuführen. Die Signale bei -19 ppm sind jeweils SiCl₄ zuzuordnen.

## Patentansprüche

1. Verfahren zur Herstellung von Hexachlordisilan (Si₂Cl₆) wobei chloriertes Polysilan der Formel SiClₓ mit x = 0,2 bis 0,8 oxidativ mittels Chlorierung gespalten wird.

2. Verfahren nach Anspruch 1, **dadurch gekennzeichnet, dass** die Chlorierung mit Chlorgas erfolgt.

3. Verfahren nach Anspruch 2, **dadurch gekennzeichnet, dass** die oxidative Spaltung in einem Temperaturbereich von 80-145 °C, insbesondere bei 110-130 °C, durchgeführt wird.

4. Verfahren nach einem der vorangehenden Ansprüche, **dadurch gekennzeichnet, dass** die oxidative Spaltung bei Normaldruck bis 300 mbar Überdruck durchgeführt wird.

5. Verfahren nach einem der vorangehenden Ansprüche, **dadurch gekennzeichnet, dass** das durch die oxidative Spaltung erhaltene Endprodukt einem Trennschritt, insbesondere durch Destillation, unterzogen wird.

6. Verfahren nach einem der vorangehenden Ansprüche, **dadurch gekennzeichnet, dass** als Ausgangsstoff durch Thermolyse von (SiCl₂)ₓ, gewonnenes chloriertes Polysilan der Formel SiClₓ mit x = 0,2-0,8 verwendet wird.

7. Verfahren nach einem der vorangehenden Ansprüche, **dadurch gekennzeichnet, dass** als Ausgangsstoff durch Thermolyse von (SiCl₂)ₓ welches durch ein plasmachemisches Verfahren hergestellt wurde, gewonnenes chloriertes Polysilan der Formel SiClₓ mit x = 0,2-0,8 verwendet wird.

8. Verfahren nach einem der vorhergehenden Ansprüche, dass als Ausgangsstoff durch Thermolyse von (SiCl₂)ₓ, welches durch ein thermisches Verfahren hergestellt wurde, gewonnenes chloriertes Polysilan der Formel SiClₓ mit x = 0,2 bis 0,8 verwendet wird.

9. Verfahren nach einem der vorangehenden Ansprüche, **dadurch gekennzeichnet, dass** chloriertes Polysilan der Formel SiClₓ mit x = 0,5-0,7 verwendet wird.

10. Verfahren nach einem der vorangehenden Ansprüche, **dadurch gekennzeichnet, dass** Hexachlordisilan in einem Anteil von > 60 Gewichts-% vom Endprodukt erhalten wird.

11. Verfahren nach einem der vorangehenden Ansprüche, **dadurch gekennzeichnet, dass** es katalysatorfrei durchgeführt wird.

12. Verfahren nach einem der vorangehenden Ansprüche, **dadurch gekennzeichnet, dass** es ohne Zugabe eines Katalysators durchgeführt wird.

13. Verfahren nach einem der vorangehenden Ansprüche, **dadurch gekennzeichnet, dass** das chlorierte Polysilan ohne vorherige Aktivierung oxidativ gespalten wird.

## Claims

1. Method of producing hexachlorodisilane (Si₂Cl₆), wherein chlorinated polysilane of the formula SiClₓ with x = 0.2 - 0.8 is oxidatively cleaved by chlorination.

2. The method according to claim 1, **characterized in that** the chlorination is effected with chlorine gas.

3. The method according to claim 2, **characterized in that** the oxidative cleavage is effected in a temperature range of 80 to 145°C, in particular 110 to 130 °C.

4. The method according to one of the preceding claims, **characterized in that** the oxidative cleavage is effected at an atmospheric pressure to 300 mbar overpressure.

5. The method according to one of the preceding claims, **characterized in that** the end product obtained by the oxidative cleavage is subjected to a separating step, in particular by distillation.

6. The method according to one of the preceding claims, **characterized in that** chlorinated polysilane of the formula SiClₓ where x = 0.2 - 0.8 obtained by thermolysis of (SiCl₂)ₓ is used as the starting material.

7. The method according to one of the preceding claims, **characterized in that** chlorinated polysilane of the formula SiClₓ where x = 0.2 - 0.8 obtained by thermolysis of (SiCl₂)ₓ produced by a plasma-chemical process is used as the starting material.

8. The method according to one of the preceding claims, **characterized in that** chlorinated polysilane of the formula SiClₓ where x = 0.2 - 0.8 obtained by thermolysis of (SiCl₂)ₓ produced by a thermal process is used as the starting material.

9. The method according to one of the preceding claims, **characterized in that** chlorinated polysilane of the formula SiClₓ is used with x = 0.5 - 0.7.

10. The method according to one of the preceding claims, **characterized in that** hexachlorodisilane is obtained in a proportion of more than 60% by weight of the end product.

11. The method according to one of the preceding claims, **characterized in that** it is performed catalyst-free.

12. The method according to one of the preceding claims, **characterized in that** it is performed without adding a catalyst.

13. The method according to one of the preceding claims, **characterized in that** the chlorinated polysilane is oxidatively cleaved without prior activation.

## Revendications

1. Procédé de fabrication d'hexachlordisilane (Si₂Cl₆), du polysilane chloré de la formule SiClₓ avec x = 0,2 à 0,8, étant fractionné de manière oxydative par chloration.

2. Procédé selon la revendication 1, **caractérisé en ce que** la chloration est réalisée avec du gaz chloré.

3. Procédé selon la revendication 2, **caractérisé en ce que** le fractionnement oxydatif est réalisé dans une plage de température de 80 à 145°C, notamment à 110 - 130°C.

4. Procédé selon l'une quelconque des revendications précédentes, **caractérisé en ce que** le fractionnement oxydatif est réalisé à une pression normale jusqu'à une surpression de 300 mbars.

5. Procédé selon l'une quelconque des revendications précédentes, **caractérisé en ce que** le produit final obtenu par le fractionnement oxydatif est soumis à une étape de séparation, notamment par distillation.

6. Procédé selon l'une quelconque des revendications précédentes, **caractérisé en ce que** du polysilane chloré, obtenu par thermolyse de (SiCl₂)ₓ, de la formule SiClₓ avec x = 0,2 à 0,8, est utilisé comme substance de départ.

7. Procédé selon l'une quelconque des revendications précédentes, **caractérisé en ce que** du polysilane chloré, obtenu par thermolyse de (SiCl₂)ₓ, fabriqué au moyen d'un procédé plasmachimique, de la formule SiClₓ, avec x = 0,2 à 0,8, est utilisé comme substance de départ.

8. Procédé selon l'une quelconque des revendications précédentes, **caractérisé en ce que** du polysilane chloré, obtenu par thermolyse de (SiCl₂)ₓ, fabriqué au moyen d'un procédé thermique, de la formule SiClₓ avec x = 0,2 à 0,8, est utilisé comme substance de départ.

9. Procédé selon l'une quelconque des revendications précédentes, **caractérisé en ce que** du polysilane chloré de la formule SiClₓ avec x = 0,5 à 0,7 est utilisé

10. Procédé selon l'une quelconque des revendications précédentes, **caractérisé en ce que** de l'hexachlordisilane dans une proportion > 60% en poids du produit final est obtenu.

11. Procédé selon l'une quelconque des revendications précédentes, **caractérisé en ce qu'**il est réalisé en étant exempt de catalyseur.

12. Procédé selon l'une quelconque des revendications précédentes, **caractérisé en ce qu'**il est réalisé sans adjonction d'un catalyseur.

13. Procédé selon l'une quelconque des revendications précédentes, **caractérisé en ce que** le polysilane chloré est divisé de manière oxydative sans activation préalable.
